# EUROPÄISCHE PATENTANMELDUNG

(11) **EP 3 425 519 A1**
(43) Veröffentlichungstag der Anmeldung: **09.01.2019**
(21) Anmeldenummer: 17179817.6
(22) Anmeldetag: 05.07.2017
(51) Int. Cl.: G06F 17/18, G01J 3/28

(54) **VERFAHREN ZUM RECHNERGESTÜTZTEN KONFIGURIEREN EINES DATENGETRIEBENEN MODELLS BASIEREND AUF TRAININGSDATEN**

(71) Anmelder: Siemens Aktiengesellschaft, 80333 München (DE)
(72) Erfinder: ENGEL, Thomas, 73432 Aalen (DE); GIGLER, Alexander Michael, 86836 Untermeitingen (DE)

(57) **Zusammenfassung**

Die Erfindung betrifft ein Verfahren zum rechnergestützten Konfigurieren eines datengetriebenen Modells (NN) basierend auf Trainingsdaten (TD), welche eine Mehrzahl von Datensätzen (DS) umfassen, wobei ein jeweiliger Datensatz (DS) eine Messreihe (MR) mit einer Mehrzahl von ersten Eingangsgrößen (EG) mit zugeordneten ersten Messwerten (MW) sowie einen zu der Messreihe (MR) gehörigen Zielvektor (ZV) aus einem oder mehreren Zielgrößen (ZG) mit zugeordneten Zielwerten (ZW) enthält, wobei die ersten Eingangsgrößen (EG) basierend auf einer vorgegebenen Ordnung aufeinander folgen. Das erfindungsgemäße Verfahren zeichnet sich dadurch aus, dass die Messreihen (MR) einer geeigneten Vorverarbeitung umfassend einen Binning-Schritt (BS) unterzogen werden. Im Rahmen dieses Binning-Schritts (BS) werden Messcharakteristika (MC) berücksichtigt, die bei der Messung der jeweiligen Messwerte (MW) vorlagen. Ein geeignetes datengetriebenes Modell, wie z.B. ein neuronales Netz, wird dann basierend auf den vorverarbeiteten Messreihen (MR') gelernt. Dieses gelernte datengetriebene Modell (NN) ermöglicht eine genaue Prognose von Zielvektoren in Abhängigkeit von entsprechenden Messreihen (MR). Das Verfahren kann beispielsweise zur Analyse von optischen Spektren eingesetzt werden. Insbesondere kann mit dem gelernten Modell vorhergesagt werden, ob die Gewebeprobe, für welche ein optisches Spektrum erfasst wurde, krankhaftes Gewebe repräsentiert.

## Beschreibung

Die Erfindung betrifft ein Verfahren zum rechnergestützten Konfigurieren eines datengetriebenen Modells basierend auf Trainingsdaten. Die Erfindung kann in einer Vielzahl von technischen Anwendungsgebieten eingesetzt werden. Beispielsweise kann die Erfindung auf dem Gebiet der Medizintechnik verwendet werden, um einen Arzt beim Klassifizieren von Gewebetypen zu unterstützen.

Beispielsweise werden spektroskopische Verfahren in vielen Bereichen der Chemie, Lebensmittelchemie und Biochemie sowie der Biologie und Medizin zur Bestimmung bzw. Klassifikation von Stoffen genutzt. Die Verfahren beruhen darauf, dass aufgezeichnete optische Spektren als charakteristische Fingerprints der (bio)chemischen Zusammensetzung der untersuchten Probe interpretiert und zur Klassifikation herangezogen werden. Um Spektraldaten von Einzelproben zur Klassifikation nutzen zu können, ist oftmals Vorwissen über die typischen Eigenschaften der zu unterscheidenden Klassen notwendig. So werden beispielsweise Peaks in bekannten Spektralbereichen analysiert, um den Wasser- und Sauerstoffgehalt zu ermitteln und damit auffällige Testproben zu isolieren. Sollen jedoch Klassen unterschieden werden, deren biochemische und somit spektrale Eigenschaften nicht oder nur teilweise bekannt sind, können diese Verfahren nicht zur Anwendung gebracht werden.

Aus dem Stand der Technik ist es bekannt, datengetriebene Modelle mittels Messreihen, wie z.B. den oben beschriebenen Spektren, als Trainingsdaten zu lernen. Für die optischen Spektren der Trainingsdaten ist dabei deren Zugehörigkeit zu entsprechenden Klassen bekannt. Mit dem gelernten datengetriebenen Modell kann dann ermittelt werden, zu welchen Klassen ein entsprechendes optisches Spektrum gehört. Da häufig nicht ausreichend Trainingsdatensätze vorliegen, können die datengetriebenen Modelle jedoch oftmals nur unzureichend gelernt werden, so dass keine ausreichende Vorhersagegenauigkeit durch die gelernten datengetriebenen Modelle gewährleistet ist.

Aufgabe der Erfindung ist es deshalb, ein Verfahren zum rechnergestützten Konfigurieren eines datengetriebenen Modells basierend auf Trainingsdaten zu schaffen, welches auch bei einer geringen Menge an Trainingsdaten zu einem datengetriebenen Modell mit hoher Vorhersagegenauigkeit führt.

Diese Aufgabe wird durch die unabhängigen Patentansprüche gelöst. Weiterbildungen der Erfindung sind in den abhängigen Patentansprüchen definiert.

Das erfindungsgemäße Verfahren dient zum rechnergestützten Konfigurieren eines datengetriebenen Modells basierend auf Trainingsdaten. Die Trainingsdaten umfassen eine Mehrzahl von Datensätzen. Ein jeweiliger Datensatz enthält eine Messreihe mit einer Mehrzahl von ersten Eingangsgrößen mit zugeordneten ersten Messwerten sowie einen zu der Messreihe gehörigen Zielvektor aus einem oder mehreren Zielgrößen mit zugehörigen Zielwerten. Die ersten Eingangsgrößen folgen basierend auf einer vorgegebenen Ordnung aufeinander. Diese vorgegebene Ordnung gibt somit eine Reihenfolge der Eingangsgrößen und der damit korrelierten Messwerte wieder. Beispielsweise kann die vorgegebene Ordnung durch physikalische Parameter, wie Energien oder Wellenlängen, gegeben sein, wobei die Reihenfolge der Richtung hin zu größeren oder kleineren Werten der physikalischen Parameter entspricht. Ebenso kann die vorgegebene Ordnung durch die Zeit repräsentiert sein, was gleichbedeutend damit ist, dass eine jeweilige Messreihe eine Zeitreihe von aufeinander folgenden Messwerten darstellt.

Im Schritt a) des erfindungsgemäßen Verfahrens werden die Messreihen der Trainingsdaten jeweils einer Vorverarbeitung unterzogen, wodurch modifizierte Trainingsdaten aus modifizierten Datensätzen erhalten werden. Ein jeweiliger modifizierter Datensatz umfasst dabei eine vorverarbeitete Messreihe sowie den gleichen Zielvektor wie die Messreihe ohne Vorverarbeitung. Eine vorverarbeitete Messreihe umfasst eine Mehrzahl von zweiten Eingangsgrößen mit zugeordneten zweiten Messwerten, welche basierend auf den ersten Messwerten ermittelt werden.

Im Rahmen der erfindungsgemäßen Vorverarbeitung wird ein Binning-Schritt durchgeführt, in dem erste Messwerte von ersten und insbesondere benachbarten ersten Eingangsgrößen der jeweiligen Messreihe in Abhängigkeit von einem oder mehreren Messcharakteristika zu Messwert-Abschnitten mit zugeordneten Abschnittswerten zusammengefasst werden. Das oder die Messwertcharakteristika lagen dabei bei den jeweiligen Messungen vor, aus denen die jeweiligen ersten Messwerte gewonnen wurden. In einer bevorzugten Variante wird der Binning-Schritt direkt im Raum der ersten Messwerte durchgeführt. Nichtsdestotrotz besteht auch die Möglichkeit, dass der Binning-Schritt auf Werte angewendet wird, die aus einer Umrechnung aus den ersten Messwerten hervorgehen.

Gemäß dem Binning-Schritt des erfindungsgemäßen Verfahrens wird die Anzahl von ersten (vorzugsweise benachbarten) Eingangsgrößen festgelegt, welche zu Messwert-Abschnitten zusammengefasst werden. Diese Anzahl kann dabei über die Messreihe hinweg variieren. Darüber hinaus kann ggf. auch der Offset der einzelnen Messwert-Abschnitte im Rahmen des Binnings geeignet festgelegt werden.

In einer bevorzugten Variante entspricht die oben definierte Mehrzahl von zweiten Eingangsgrößen den Messwert-Abschnitten und die zweiten Messwerte stellen die Abschnittswerte dar. Nichtsdestotrotz kann nach dem Binning-Schritt im Rahmen der Vorverarbeitung ein weiterer Vorverarbeitungsschritt durchgeführt werden. In diesem Fall können die zweiten Eingangsgrößen und zweiten Messwerte andere Größen als die Messwert-Abschnitte und Abschnittswerte sein.

Im Rahmen des Binning-Schritts können ferner auch nur Teile der ersten Eingangsgrößen zu Messwert-Abschnitten zusammengefasst werden. Mit anderen Worten können nach Durchführung des Binning-Schritts vereinzelt erste Eingangsgrößen auch nicht mit weiteren ersten Eingangsgrößen korreliert sein. Diese vereinzelten Eingangsgrößen werden im Rahmen des erfindungsgemäßen Verfahrens wie Messwert-Abschnitte mit dem entsprechenden ersten Messwert als Abschnittswert verarbeitet.

In einem Schritt b) des erfindungsgemäßen Verfahrens wird das datengetriebene Modell basierend auf den modifizierten Trainingsdaten rechnergestützt gelernt, wobei das gelernte datengetriebene Modell die Bestimmung von Zielvektoren basierend auf vorverarbeiteten Messreihen ermöglicht.

Das erfindungsgemäße Verfahren zeichnet sich dadurch aus, dass Informationen bezüglich der Erfassung der Messdaten geeignet berücksichtigt werden, um eine auf physikalischen Gegebenheiten beruhende Anpassung der als Trainingsdaten genutzten Messreihen zu erreichen und hierdurch den Informationsgehalt der Messdaten zu erhöhen. Hierdurch kann eine gute Qualität des gelernten datengetriebenen Modells auch im Falle einer beschränkten Anzahl von Trainingsdatensätzen gewährleistet werden.

In einer besonders bevorzugten Ausführungsform umfassen das oder die Messcharakteristika das Rauschen bei den jeweiligen Messungen, wobei der Binning-Schritt erste Messwerte von ersten und insbesondere benachbarten ersten Eingangsgrößen der jeweiligen Messreihe derart zusammenfasst, dass das mittlere Signal-Rausch-Verhältnis über die Messwert-Abschnitte maximiert ist, wobei vorzugsweise als Nebenbedingung der Maximierung berücksichtigt wird, dass eine vorgegebene charakteristische Signalform, z.B. in der Form von Peakbreiten in Signalverläufe, erhalten bleibt. Geeignete Optimierungsverfahren zur Durchführung dieser Variante der Erfindung sind an sich bekannt und werden deshalb nicht im Detail beschrieben. Mit der soeben beschriebenen Ausführungsform wird eine hohe Qualität der im Rahmen des Lernens des datengetriebenen Modells verwendeten Trainingsdaten sichergestellt. Durch die optimierte Datenqualität und den damit verbundenen verbesserten Informationsgehalt kann auch beim Lernen mit weniger Test- bzw. Lerndaten ein gutes Klassifizierungsmodell erhalten werden.

Neben dem oben beschriebenen Binning-Schritt kann die Vorverarbeitung in Schritt a) des erfindungsgemäßen Verfahrens auch noch einen oder mehrere weitere Vorverarbeitungsschritte enthalten. In einer bevorzugten Ausführungsform umfasst die Vorverarbeitung ferner eine Umskalierung und/oder Normierung der ersten Messwerte oder von daraus abgeleiteten Werten.

In einer weiteren, besonders bevorzugten Ausführungsform werden die Abschnittswerte der oben definierten Messwert-Abschnitte mittels einer Mittelwertbildung über die ersten Messwerte der jeweiligen Messwert-Abschnitte bestimmt. Mit anderen Worten stellen die Abschnittswerte einen Mittelwert dieser ersten Messwerte dar. Je nach Ausgestaltung kann dabei ein beliebiger Mittelwert bestimmt werden. Insbesondere kann es sich um eine gewichtete oder ungewichtete Mittelwertbildung handeln. In einer bevorzugten Variante wird als Mittelwert der arithmetische Mittelwert bestimmt. Ebenso kann jedoch auch der Median als Mittelwert bestimmt werden bzw. über ein Gauß-Profil gemittelt werden.

In einer weiteren Variante des erfindungsgemäßen Verfahrens wird im Rahmen der Vorverarbeitung im Schritt a) für jede Messreihe die erste Ableitung und/oder die zweite Ableitung nach einem die vorgegebene Ordnung charakterisierenden Ordnungsparameter bestimmt, wobei die erste Ableitung und/oder die zweite Ableitung als zweite Messwerte von zweiten Eingangsgrößen in der vorverarbeiteten Messreihe enthalten sind. Auf diese Weise wird der Informationsgehalt in den Messreihen weiter erhöht, wodurch das Lernen des datengetriebenen Modells verbessert werden kann. Je nach Ausgestaltung kann der Ordnungsparameter unterschiedlich festgelegt sein. Im Falle eines optischen Spektrums kann der Ordnungsparameter z.B. die Wellenlänge oder eine daraus abgeleitete Größe, wie z.B. die Energie, sein. Ferner kann der Ordnungsparameter die Zeit darstellen, sofern es sich bei der Messreihe um eine Zeitreihe handelt.

In einer besonders bevorzugten Ausführungsform ist das im erfindungsgemäßen Verfahren verwendete datengetriebene Modell ein neuronales Netz aus einer Eingangsschicht, einer oder mehreren versteckten Schichten und einer Ausgangsschicht, wobei die Eingangsschicht als Eingaben vorverarbeitete Messreihen erhält und basierend auf diesen Eingaben Ausgaben in der Form von entsprechenden Zielvektoren generiert.

In einer bevorzugten Variante wird als neuronales Netz ein sog. CNN-Netz (CNN = Convolutional Neural Network) verwendet. Solche Netze sind an sich bekannt und enthalten als versteckte Schicht zumindest einen Convolution-Layer, der über eine lineare Transformation eine sog. Feature-Map generiert. Vorzugsweise ist auch zumindest ein Pooling-Layer vorgesehen, der die Dimension der Merkmale der Feature-Map reduziert. Das CNN-Netz ist in einer bevorzugten Ausgestaltung ein tiefes CNN-Netz, das auch als DCNN-Netz (DCNN = Deep Convolutional Neural Network) bezeichnet wird und eine Vielzahl von versteckten Schichten umfasst

Die Erfindung ist jedoch nicht auf die Verwendung von neuronalen Netzen als datengetriebene Modelle beschränkt. Vielmehr kann das datengetriebene Modell auch eine Support Vector Machine und/oder ein Cluster-Verfahren (z.B. k-Means-Clustering) und/oder einen Entscheidungsbaum und/oder eine PLS-Regression (PLS = Partial Least Squares) umfassen. Als PLS-Regression wird in einer speziellen Variante eine PLSDA-Regression (PLSDA = Partial Least Squares Discriminant Analysis) verwendet. Alle genannten datengetriebenen Modelle sind aus dem Stand der Technik bekannt und werden deshalb nicht im Detail erläutert.

In einer weiteren bevorzugten Variante des erfindungsgemäßen Verfahrens beschreiben eine oder mehrere Zielgrößen des jeweiligen Zielvektors jeweils eine Zuordnung oder NichtZuordnung zu einer Klasse. In diesem Fall wird das datengetriebene Modell zur Klassifikation entsprechender Messreihen verwendet. Nichtsdestotrotz kann eine Zielgröße auch eine Variable mit einer Vielzahl von kontinuierlichen oder diskreten Werten darstellen.

In einer besonders bevorzugten Ausführungsform der Erfindung sind die Messreihen der Trainingsdaten optische Spektren für jeweilige Objekte, wobei ein optisches Spektrum für ein jeweiliges Objekt erste Messwerte umfasst, welche eine Absorption oder eine Transmission von elektromagnetischer Strahlung für das jeweilige Objekt in Abhängigkeit von Spektralwerten repräsentiert, welche von der Wellenlänge der elektromagnetischen Strahlung abhängen. Dabei spezifiziert der Zielvektor als Zielgrößen ein oder mehrere Merkmale des jeweiligen Objekts. In einer Ausgestaltung repräsentieren die Spektralwerte direkt die Wellenlänge der elektromagnetischen Strahlung. Nichtsdestotrotz können die Spektralwerte z.B. auch die Energie der Strahlung repräsentieren.

Mit der soeben beschriebenen Ausführungsform können optische Spektren von beliebigen Materialien analysiert werden, um hierüber Merkmale der Materialien zu ermitteln. In einer bevorzugten Variante ist ein jeweiliges Objekt eine biologische Gewebeprobe des menschlichen oder tierischen Körpers. Der Zielvektor umfasst dabei vorzugsweise ein Merkmal, welches die biologische Gewebeprobe als krankhaft oder nicht krankhaft spezifiziert, z.B. als tumorös oder nicht tumorös. Ebenso ist es möglich, dass ein jeweiliges Objekt eine organische Probe ist. Der Zielvektor umfasst dabei vorzugsweise eine oder mehrere Merkmale, welche die Art der organischen Probe und/oder deren Alterungszustand spezifizieren.

In einer besonders bevorzugten Variante der Erfindung, in der die Messreihen optische Spektren darstellen, repräsentieren das oder die Messcharakteristika, die im Binning-Schritt berücksichtigt werden, die spektrale Auflösung der optischen Spektren in Abhängigkeit von den Spektralwerten. Dabei nimmt die Anzahl der ersten Messwerte, welche im Rahmen des Binning-Schritts zusammengefasst werden, mit zunehmender spektraler Auflösung monoton ab. Stellen die Spektralwerte dabei Wellenlängen dar, ist die spektrale Auflösung hin zu höheren Wellenlängen in der Regel größer, wobei in diesem Fall die Anzahl der zusammengefassten ersten Messwerte hin zu höheren Wellenlängen abnimmt.

Im Vorangegangenen wurde eine Ausführungsform beschrieben, bei der die Messreihen optische Spektren darstellen. Nichtsdestotrotz ist die Erfindung nicht darauf beschränkt und die Messreihen können auch andere geordnete Messdaten darstellen. Wie bereits oben erwähnt, können die Messreihen auch Zeitreihen sein, welche erste Messwerte umfassen, die aus Messungen zu unterschiedlichen Zeitpunkten gewonnen wurden.

Neben dem oben beschriebenen Verfahren zum Konfigurieren eines datengetriebenen Modells betrifft die Erfindung auch ein Verfahren zum rechnergestützten Bestimmen eines Zielvektors basierend auf einer Messreihe mit einer Mehrzahl von ersten Eingangsgrößen und zugeordneten ersten Messwerten, wobei der Zielvektor eine oder mehrere Zielgrößen mit zu bestimmenden Zielwerten umfasst und wobei die ersten Eingangsgrößen basierend auf einer vorgegebenen Ordnung aufeinander folgen.

Im Rahmen dieses Verfahrens wird ein gelerntes datengetriebenes Modell bereitgestellt, das mit dem erfindungsgemäßen Verfahren bzw. einer oder mehrerer bevorzugter Ausführungsformen des erfindungsgemäßen Verfahrens gelernt ist. Dabei wird die betrachtete Messreihe der gleichen Vorverarbeitung wie eine jeweilige Messreihe der Trainingsdaten in Schritt a) des Verfahrens unterzogen, mit dem das datengetriebene Modell gelernt ist, wodurch eine vorverarbeitete Messreihe erhalten wird. Mittels des gelernten datengetriebenen Modells wird dann der Zielvektor basierend auf der vorverarbeiteten Messreihe bestimmt. Das Verfahren ermöglicht somit die Prädiktion bzw. Ermittlung von Zielvektoren für Messreihen, von denen die Zielvektoren nicht bekannt sind.

Neben den oben beschriebenen erfindungsgemäßen Verfahren betrifft die Erfindung ferner ein Computerprogrammprodukt mit einem auf einem maschinenlesbaren Träger gespeicherten Programmcode zur Durchführung des erfindungsgemäßen Verfahrens zum rechnergestützten Konfigurieren eines datengetriebenen Modells bzw. des erfindungsgemäßen Verfahrens zum rechnergestützten Bestimmen eines Zielvektors bzw. zur Durchführung einer oder mehrerer bevorzugter Varianten dieser Verfahren.

Darüber hinaus betrifft die Erfindung ein Computerprogramm mit einem Programmcode zur Durchführung des erfindungsgemäßen Verfahrens zum rechnergestützten Konfigurieren eines datengetriebenen Modells bzw. des erfindungsgemäßen Verfahrens zum rechnergestützten Bestimmen eines Zielvektors bzw. einer oder mehrerer bevorzugter Varianten dieser Verfahren.

Ein Ausführungsbeispiel der Erfindung wird nachfolgend anhand der beigefügten Figuren beschrieben.

Es zeigen:
- Fig. 1: eine schematische Darstellung eines neuronalen Netzes, welches in einer Variante der Erfindung als datengetriebenes Modell verwendet wird; und
- Fig. 2: ein Flussdiagramm, welches die Schritte einer Ausführungsform des erfindungsgemäßen Verfahrens verdeutlicht.

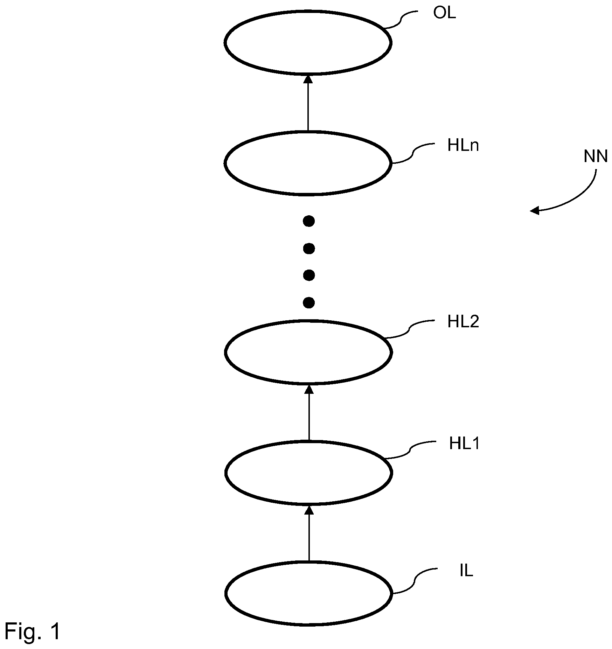

Nachfolgend wird eine Variante der Erfindung anhand der rechnergestützten Konfiguration eines datengetriebenen Modells in der Form eines neuronalen Netzes beschrieben. Ein solches neuronales Netz NN ist schematisch in Fig. 1 dargestellt. Vorzugsweise handelt es sich bei diesem Netz um ein DCNN-Netz, das bereits im Vorangegangenen erwähnt wurde.

Das Netz NN umfasst eine Eingangsschicht IL, mehrere versteckte Schichten HL1, HL2, ..., HLn sowie eine Ausgangsschicht OL. Das neuronale Netz dient dazu, basierend auf einer Messreihe von Messwerten einen Zielvektor aus einem oder mehreren Merkmalen zu ermitteln bzw. zu prognostizieren. Dieser Zielvektor wird über die Ausgangsschicht OL ausgegeben. In der hier beschriebenen Ausführungsform werden Messreihen betrachtet, welche optische Spektren von Gewebeproben betreffen. Vorzugsweise handelt es sich dabei um NIR-Spektren (NIR = Nahinfrarot), wobei beispielsweise Absorptionsspektren betrachtet werden. Diese Spektren repräsentieren die Absorption bzw. den Absorptionskoeffizienten der Gewebeprobe für Licht mit unterschiedlichen Wellenlängen. Nach entsprechendem Lernen des neuronalen Netzes NN kann dann vorhergesagt werden, ob die Gewebeprobe mit dem zugehörigen Spektrum zu einem Tumor gehört oder nicht.

Im Unterschied zu herkömmlichen Verfahren werden der Eingangsschicht IL des neuronalen Netzes NN die Messreihen nicht direkt als Eingangsgrößen zugeführt, sondern sie werden zuvor einer Vorverarbeitung unterzogen, um Vorwissen über die Erfassung der einzelnen Messwerte geeignet zu berücksichtigen.

Diese Vorverarbeitung wird auch beim Lernen des neuronalen Netzes basierend auf entsprechenden Trainingsdaten angewandt. Die Trainingsdaten stellen dabei Datensätze aus einer Vielzahl von Messreihen in der Form der oben genannten optischen Spektren dar, wobei vorbekannt ist, ob das optische Spektrum zu einem tumorösen Gewebe gehört oder nicht. Mit anderen Worten gehört zu einem Datensatz der Trainingsdaten neben dem optischen Spektrum auch ein Zielvektor, der im hier betrachteten Beispiel eine Klassifikation des Gewebes als tumorös oder nicht-tumorös darstellt.

Nichtsdestotrotz ist das erfindungsgemäße Verfahren auch für andere Arten von Zielvektoren verwendbar, welche auch mehrere Merkmale umfassen können, wobei ein jeweiliges Merkmal auch durch den entsprechenden Wert einer Variablen repräsentiert sein kann. Dabei können z.B. durch Wertebereiche einer Variablen verschiedene Zustände von Materialien charakterisiert werden, für welche die optischen Spektren erfasst wurden. Zum Beispiel kann hierüber der Alterungszustand von Materialien (wie z.B. Ölen) kategorisiert werden.

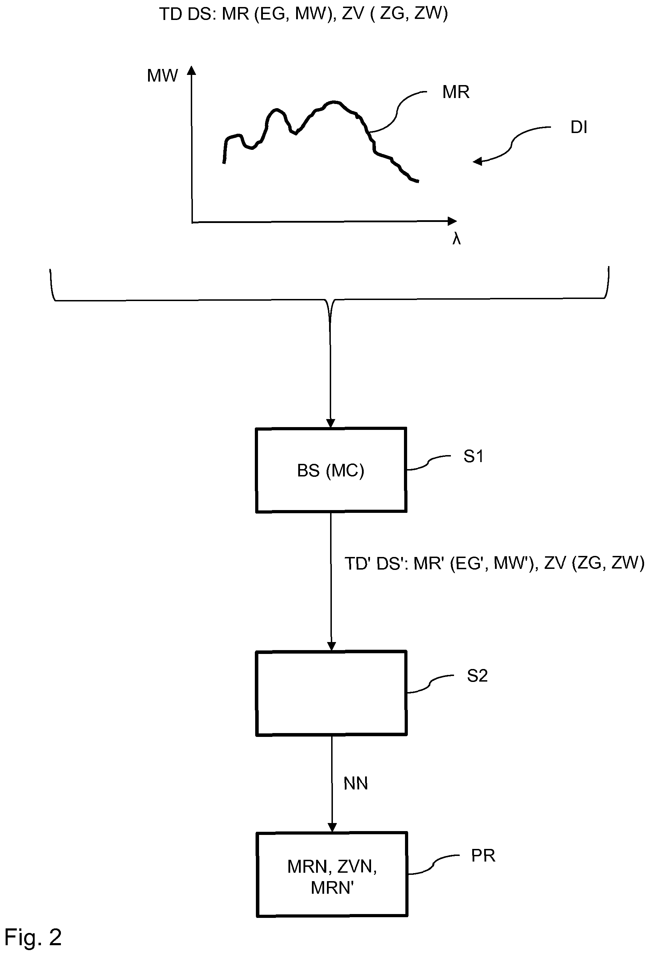

Fig. 2 zeigt das Lernen des neuronalen Netzes aus Fig. 1. Zum Lernen werden Trainingsdaten TD verwendet, welche eine Vielzahl von Datensätzen DS umfassen. Jeder Datensatz enthält dabei eine experimentell bestimmte Messreihe MR, welche eine Vielzahl von Eingangsgrößen EG umfasst, die hintereinander basierend auf einer vorgegebenen Ordnung angeordnet sind. Jede Eingangsgröße ist dabei mit einem Messwert MW korreliert, wobei die Eingangsgrößen von unterschiedlichen Datensätzen DS mit unterschiedlichen Messwerten MW belegt sind. Wie erwähnt, werden in der hier beschriebenen Ausführungsform Messreihen in der Form von optischen Spektren von Gewebeproben betrachtet, wobei ein entsprechendes Spektrum in dem Diagramm DI der Fig. 2 angedeutet ist.

Entlang der Abszisse des Diagramms DI ist die Wellenlänge λ des Lichts angedeutet, welches auf die entsprechende Gewebeprobe eingestrahlt wird. Die Ordinate gibt die Messwerte MW wieder, welche in dem hier betrachteten Beispiel Absorptionskoeffizienten bei den verschiedenen Wellenlängen entsprechen. Hieraus ergibt sich die Messreihe MR in der Form der dargestellten Kurve. In dem betrachteten Beispiel wird die Ordnung der Eingangsgrößen über die verschiedenen Wellenlängen λ erreicht. Mit anderen Worten stellt die Wellenlänge λ einen Ordnungsparameter zur Beschreibung der Ordnung der Eingangsgrößen dar.

Jedes Spektrum eines Datensatzes DS der Trainingsdaten TD ist mit einem Zielvektor ZV korreliert, der in der hier beschriebenen Ausführungsform eine einzelne Zielgröße ZG umfasst, die mit einem entsprechenden Zielwert ZW belegt ist. Dieser Zielwert stellt die Information dar, ob die Gewebeprobe des entsprechenden Datensatzes DS tumorös ist oder nicht.

Basierend auf den soeben beschriebenen Trainingsdaten wird das Lernen des neuronalen Netzes NN durchgeführt. Für dieses Lernen werden jedoch die Trainingsdaten nicht direkt genutzt, sondern sie werden einer Vorverarbeitung unterzogen, welche durch Schritt S1 der Fig. 2 angedeutet ist. Die Vorverarbeitung kann verschiedene Teilschritte umfassen. Erfindungswesentlich ist jedoch, dass sie einen Binning-Schritt BS enthält. In diesem Binning-Schritt werden Messwerte, welche für benachbarte Wellenlängen bestimmt wurden, unter Berücksichtigung von Messcharakteristika MC betreffend die Messung der jeweiligen Messwerte zusammengefasst. Die zusammengefassten Messwerte stellen Messwert-Abschnitte dar, denen jeweils ein Abschnittswert zugeordnet ist, der im hier betrachteten Beispiel der Mittelwert der zusammengefassten Messwerte ist.

In der hier beschriebenen Ausführungsform wird als ein Messcharakteristikum das Rauschen bei der jeweiligen Messung berücksichtigt. Dabei wird die Anzahl der zusammengefassten Messwerte derart gewählt, dass das mittlere Signal-Rausch-Verhältnis über die zusammengefassten Messwert-Abschnitte maximiert ist und zugleich die Signalform über die entstehende Mittelung noch gut erkennbar bleibt. Entsprechende Lösungsverfahren für ein solches Optimierungsproblem sind dem Fachmann hinlänglich bekannt und werden deshalb nicht im Detail erläutert. Im betrachteten Beispiel ist es ferner zugelassen, dass die Anzahl der Messwerte, die zusammengefasst werden, nicht konstant bleibt, sondern in Abhängigkeit von der Wellenlänge λ variieren kann.

Alternativ oder zusätzlich zu der genannten Maximierung des Signal-Rausch-Verhältnisses kann in dem Verfahren der Fig. 2 auch das Messwertcharakteristikum der spektralen Auflösung der Messwerte innerhalb der jeweiligen optischen Spektren berücksichtigt werden. Dabei macht man sich die Erkenntnis zunutze, dass die Auflösung hin zu größeren Wellenlängen zunimmt, da dort niedrigere Energien vorliegen und sich z.B. im mittleren Infrarot die charakteristischen Eigenmoden der chemischen Gruppen des Materials in Fingerprint-Manier voneinander unterscheiden. Es entstehen bei größeren Wellenlängen also schärfere Peaks im Spektrum. Dieses Messwertcharakteristikum kann nunmehr derart in der Vorverarbeitung einfließen, dass die Anzahl der Messwerte, welche zu Messwert-Abschnitten zusammengefasst werden, aufgrund der höheren spektralen Auflösung hin zu höheren Wellenlängen λ abnimmt.

Die Vorverarbeitung gemäß dem Schritt S1 der Fig. 2 kann zusätzlich zu dem Binning-Schritt BS auch weitere Schritte umfassen. Insbesondere können die Messwerte umskaliert oder normiert werden. Zum Beispiel können die Messwerte bzw. die daraus resultierenden Messwert-Abschnitte nicht entlang einer Wellenlängenskala, sondern entlang einer Energieskala aufgetragen werden, was eine nicht-lineare Umskalierung darstellt. Darüber hinaus können im Rahmen der Vorverarbeitung auch noch weitere Messwerte hinzugefügt werden, die aus den ursprünglichen Messwerten mit mathematischen Berechnungen hervorgehen. Insbesondere kann z.B. die Steigung (erste Ableitung) bzw. die Krümmung (zweite Ableitung) der Kurve der jeweiligen optischen Spektren als weitere Größe betrachtet werden.

Als Ergebnis des Vorverarbeitungsschritts S1 enthält man schließlich modifizierte Trainingsdaten TD', die aus modifizierten Datensätzen DS' bestehen. Ein jeweiliger modifizierter Datensatz DS' enthält dabei eine gemäß der obigen Vorverarbeitung erhaltene Messreihe MR', die durch neue Eingangsgrößen EG' in der Form von Messwert-Abschnitten MW' mit zugeordneten Abschnittswerten charakterisiert ist. Unabhängig hiervon bleibt der Zielvektor ZV mit der Zielgröße ZG und dem Zielwert ZW für den modifizierten Datensatz DS' unverändert, d.h. der Zielvektor ist der gleiche Zielvektor wie im Falle des unmodifizierten Datensatzes DS.

Basierend auf den Trainingsdaten TD' wird schließlich das neuronale Netz NN der Fig. 1 gelernt. Dieses Netz erhält als Eingabedaten die vorverarbeiteten Messreihen MR' mit den modifizierten Eingangsgrößen EG'. Im Rahmen der Vorverarbeitung wurde dabei sichergestellt, dass die Anzahl der modifizierten Eingangsgrößen EG' für alle Datensätze DS' die gleiche ist. Das Lernen des neuronalen Netzes erfolgt mit an sich bekannten Methoden und wird deshalb nicht näher beschrieben. Als Ergebnis erhält man das gelernte neuronale Netz NN, welches anschließend in dem in Fig. 2 dargestellten Prognoseschritt PR dazu verwendet wird, um den entsprechenden Zielvektor ZVN für eine neue Messreihe MRN mit unbekanntem Zielvektor korrekt zu bestimmen. Im Rahmen des Schritts PR wird dabei die gleiche Vorverarbeitung durchgeführt, welche auf die Trainingsdaten beim Lernen des neuronalen Netzes angewendet wurden. Mit anderen Worten wird auf eine jeweilige Messreihe MRN das gleiche Binning zur Erzeugung von vorverarbeiteten Messreihen MRN' angewendet. Gegebenenfalls werden auch noch weitere Vorverarbeitungsschritte durchgeführt, sofern diese auch bei den Trainingsdaten implementiert wurden. Als Ergebnis des Schritts PR erhält man schließlich einen berechneten Zielvektor ZVN, der im vorliegenden Fall angibt, ob das optische Spektrum zu einer Gewebeprobe gehört, welche tumorös ist. In einer abgewandelten Ausführungsform kann auch ein geeigneter mehrdimensionaler Zielvektor verwendet werden, der ferner spezifiziert, welcher Gewebeart, wie z.B. Muskel, Blutgefäß, Sehnen, Nerven, Fett etc., die Gewebeprobe angehört.

Die im Vorangegangenen beschriebene Ausführungsform der Erfindung weist eine Reihe von Vorteilen auf. Insbesondere wird ein Verfahren zum Lernen eines datengetriebenen Modells geschaffen, bei dem die betrachteten Messdaten unter Berücksichtigung von Messcharakteristika geeignet vorverarbeitet werden, wodurch ein an die physikalischen Gegebenheiten der Messung angepasstes Lernen erreicht werden kann. Im Besonderen kann dabei die Datenqualität vor dem eigentlichen Lernprozess verbessert werden und hierdurch die Vorhersagequalität der gelernten datengetriebenen Modelle erhöht werden. Zugleich kann die Qualität des Lernens auch bei geringer Anzahl von Trainingsdatensätzen verbessert werden. Das ist insbesondere bei medizinischen Fragestellungen sehr hilfreich und vorteilhaft, da der Zugang zu großen Datenmengen in Trainings- und Validierungsphasen sehr aufwändig bis nahezu unmöglich ist.

Das erfindungsgemäße Verfahren kann in einer Vielzahl von Anwendungsbereichen eingesetzt werden. Wie oben beschrieben, können z.B. optische Spektren analysiert werden. Nichtsdestotrotz besteht auch die Möglichkeit, dass Messreihen in der Form von Zeitreihen mit aufeinanderfolgenden Messwerten verarbeitet werden.

## Patentansprüche

1. Verfahren zum rechnergestützten Konfigurieren eines datengetriebenen Modells (NN) basierend auf Trainingsdaten (TD), welche eine Mehrzahl von Datensätzen (DS) umfassen, wobei ein jeweiliger Datensatz (DS) eine Messreihe (MR) mit einer Mehrzahl von ersten Eingangsgrößen (EG) mit zugeordneten ersten Messwerten (MW) sowie einen zu der Messreihe (MR) gehörigen Zielvektor (ZV) aus einem oder mehreren Zielgrößen (ZG) mit zugeordneten Zielwerten (ZW) enthält, wobei die ersten Eingangsgrößen (EG) basierend auf einer vorgegebenen Ordnung aufeinander folgen, wobei:
a) die Messreihen (MR) der Trainingsdaten (TD) jeweils einer Vorverarbeitung unterzogen werden, wodurch modifizierte Trainingsdaten (TD') aus modifizierten Datensätzen (DS') erhalten werden, wobei ein jeweiliger modifizierter Datensatz (DS') eine vorverarbeitete Messreihe (MR') sowie den gleichen Zielvektor (ZV) wie die Messreihe (MR) ohne Vorverarbeitung umfasst, wobei die vorverarbeitete Messreihe (MR') eine Mehrzahl von zweiten Eingangsgrößen (EG') mit zugeordneten zweiten Messwerten (MW') aufweist, welche basierend auf den ersten Messwerten (MW) ermittelt werden, wobei die Vorverarbeitung einen Binning-Schritt (BS) enthält, in dem erste Messwerte (MW) von ersten Eingangsgrößen (EG) der jeweiligen Messreihe (MR) in Abhängigkeit von einem oder mehreren Messcharakteristika (MC) zu Messwert-Abschnitten mit zugeordneten Abschnittswerten zusammengefasst werden, wobei das oder die Messcharakteristika (MC) bei den jeweiligen Messungen vorlagen, aus denen die jeweiligen ersten Messwerte (MW) gewonnen wurden;
b) das datengetriebene Modell (NN) basierend auf den modifizierten Trainingsdaten (TD') rechnergestützt gelernt wird, wobei das gelernte datengetriebene Modell (NN) die Bestimmung von Zielvektoren (ZVN) basierend auf vorverarbeiteten Messreihen (MRN') ermöglicht.

2. Verfahren nach Anspruch 1, wobei das oder die Messcharakteristika (MC) das Rauschen bei den jeweiligen Messungen (MW) umfassen, wobei der Binning-Schritt (BS) erste Messwerte (MW) von ersten Eingangsgrößen (EG) der jeweiligen Messreihe (MR) derart zusammenfasst, dass das mittlere Signal-Rausch-Verhältnis über die Messwert-Abschnitte maximiert ist.

3. Verfahren nach Anspruch 1 oder 2, wobei die Vorverarbeitung in Schritt a) eine Umskalierung und/oder Normierung der ersten Messwerte (MW) oder von daraus abgeleiteten Werten umfasst.

4. Verfahren nach einem der vorhergehenden Ansprüche, wobei die Abschnittswerte der Messwert-Abschnitte mittels einer ungewichteten oder gewichteten Mittelwertbildung über die ersten Messwerte (MW) der jeweiligen Messwert-Abschnitte bestimmt werden.

5. Verfahren nach einem der vorhergehenden Ansprüche, wobei im Rahmen der Vorverarbeitung in Schritt a) für jede Messreihe (MR) die erste Ableitung und/oder die zweite Ableitung nach einem die vorgegebene Ordnung charakterisierenden Ordnungsparameter (A) bestimmt werden, wobei die erste Ableitung und/oder die zweite Ableitung als zweite Messwerte (MW') von zweiten Eingangsgrößen (EG') in der vorverarbeiteten Messreihe (MR') enthalten sind.

6. Verfahren nach einem der vorhergehenden Ansprüche, wobei das datengetriebene Modell (NN) ein neuronales Netz aus einer Eingangsschicht (IL), einer oder mehreren versteckten Schichten (HL1, HL2, ..., HLn) und einer Ausgangsschicht (OL) umfasst, wobei die Eingangsschicht (IL) als Eingaben vorverarbeitete Messreihen (MR') erhält und basierend auf diesen Eingaben Ausgaben in der Form von entsprechenden Zielvektoren (ZV) generiert.

7. Verfahren nach Anspruch 6, wobei das neuronale Netz (NN) ein CNN-Netz und insbesondere ein tiefes CNN-Netz umfasst.

8. Verfahren nach einem der vorhergehenden Ansprüche, wobei das datengetriebene Modell eine Support Vector Machine und/oder ein Cluster-Verfahren und/oder einen Entscheidungsbaum und/oder eine PLS-Regression, insbesondere eine PLSDA-Regression, umfasst.

9. Verfahren nach einem der vorhergehenden Ansprüche, wobei eine oder mehrere Zielgrößen (ZG) des jeweiligen Zielvektors (ZV) jeweils eine Zuordnung oder Nichtzuordnung zu einer Klasse beschreiben.

10. Verfahren nach einem der vorhergehenden Ansprüche, wobei die Messreihen (MR) der Trainingsdaten (TD) optische Spektren für jeweilige Objekte sind, wobei ein optisches Spektrum für ein jeweiliges Objekt erste Messwerte (MW) umfasst, welche eine Absorption oder eine Transmission von elektromagnetischer Strahlung für das jeweilige Objekt in Abhängigkeit von Spektralwerten repräsentiert, welche von der Wellenlänge (A) der elektromagnetischen Strahlung abhängen, wobei der Zielvektor (ZV) als Zielgrößen eine oder mehrere Merkmale des jeweiligen Objekts spezifiziert.

11. Verfahren nach Anspruch 10, wobei ein jeweiliges Objekt eine biologische Gewebeprobe ist, wobei der Zielvektor (ZV) vorzugsweise ein Merkmal umfasst, welches die biologische Gewebeprobe als krankhaft oder nicht krankhaft spezifiziert, oder wobei ein jeweiliges Objekt eine organische Probe ist, wobei der Zielvektor (ZV) vorzugsweise ein oder mehrere Merkmale umfasst, welche die Art der organischen Probe und/oder deren Alterungszustand spezifizieren.

12. Verfahren nach Anspruch 10 oder 11, wobei das oder die Messcharakteristika (MC) die spektrale Auflösung der optischen Spektren in Abhängigkeit von den Spektralwerten umfassen, wobei die Anzahl der ersten Messwerte (MW), welche im Rahmen des Binning-Schritts (BS) zusammengefasst werden, mit zunehmender spektraler Auflösung monoton abnimmt.

13. Verfahren nach einem der vorhergehenden Ansprüche, wobei die Messreihen (MR) der Trainingsdaten (TD) Zeitreihen sind, welche erste Messwerte (MW) umfassen, die aus Messungen zu unterschiedlichen Zeitpunkten gewonnen wurden.

14. Verfahren zum rechnergestützten Bestimmen eines Zielvektors (ZVN) basierend auf einer Messreihe (MRN) mit einer Mehrzahl von ersten Eingangsgrößen (EG) mit zugeordneten ersten Messwerten (MW), wobei der Zielvektor (ZVN) eine oder mehrere Zielgrößen (ZG) mit zu bestimmenden Zielwerten (ZW) umfasst und wobei die ersten Eingangsgrößen (EG) basierend auf einer vorgegebenen Ordnung aufeinander folgen, wobei
- ein gelerntes datengetriebenes Modell (NN) bereitgestellt wird, das mit einem Verfahren nach einem der Ansprüche 1 bis 13 gelernt ist;
- die Messreihe (MRN) der gleichen Vorverarbeitung wie eine jeweilige Messreihe (MR) der Trainingsdaten (TD) in Schritt a) des Verfahrens unterzogen wird, mit dem das datengetriebene Modell (NN) gelernt ist, wodurch eine vorverarbeitete Messreihe (MRN') erhalten wird;
- mittels des gelernten datengetriebenen Modells (NN) der Zielvektor (ZVN) basierend auf der vorverarbeiteten Messreihe (MRN') bestimmt wird.

15. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

16. Computerprogramm mit einem Programmcode zur Durchführung eines Verfahrens nach einem der Ansprüche 1 bis 14, wenn der Programmcode auf einem Computer ausgeführt wird.
